# EUROPÄISCHE PATENTANMELDUNG

(11) **EP 1 647 951 A1**
(43) Veröffentlichungstag der Anmeldung: **19.04.2006**
(21) Anmeldenummer: 05108945.6
(22) Anmeldetag: 28.09.2005
(51) Int. Cl.: G07F 13/06, A47J 31/44, B67D 1/12

(54) **Getränkebereiter**

(30) Priorität: 15.10.2004 DE 102004050365
(71) Anmelder: BSH Bosch und Siemens Hausgeräte GmbH, 81739 München (DE)
(72) Erfinder: Neumann, Dr.Michael, 89073 Ulm (DE)

(57) **Zusammenfassung**

Die Erfindung betrifft einen Getränkebereiter, insbesondere eine Kaffeemaschine (12;312), vorzugsweise für den Haushalt, wobei zur Bereitung eines Getränks Wasser einem Aromatauscher, und das Getränk daraus einem Auslauf (24;324) über einer Trägerfläche (20;320) für ein Auffanggefäß (40, 42, 44; 344) zugeführt wird und dieser Flüssigkeitsdurchsatz von einer Steuervorrichtung (15; 315) gesteuert wird, die eine Eingabeeinrichtung (56; 356) für Vorgaben besitzt.

Um dabei die Nachteile des bekannten Standes der Technik zu vermeidet und insbesondere die Bedienungsbequemlichkeit und/oder die Betriebssicherheit zu erhöhen wird gemäß einer ersten Lösung vorgeschlagen, dass die Steuervorrichtung (15; 315) mindestens einen Kennwert des jeweils untergestellten Auffanggefäßes (40, 42, 44; 344) berücksichtigt. Gemäß einer weiteren Lösung wird vorgeschlagen, dass das Gerät eine Messeinrichtung (46, 52, 54, 324, 372) besitzt, mittels der mindestens ein Kennwert des Auffanggefäßes (40, 42, 44; 344) und/oder der Füllstand im Auffanggefäß (40, 42, 44; 344) erfassbar sind, wobei die Steuervorrichtung (15; 315) deren Messergebnis berücksichtigt. Vorzugsweise umfasst die Steuervorrichtung (15; 315) einen Langzeit-Datenspeicher zur wiederaufrufbaren Speicherung der Vorgaben, verknüpft mit mindestens einem Kennwert für die Größe des Auffanggefäßes (40, 42, 44; 344) und vorzugsweise einer Programm- oder Benutzerkennung.

## Beschreibung

Die Erfindung betrifft einen Getränkebereiter, insbesondere eine Kaffeemaschine gemäß dem Oberbegriff des Anspruches 1 oder des Anspruches 5.

Bekannte Espresso-Vollautomaten dieser Art besitzen eine Einstelleinrichtung in Form eines Bedienfeldes an dem sich jeweils für einen Brühvorgang die Zahl der untergestellten Tassen, die Menge und z.T. auch die Art des zu verwendenden Kaffeemehls sowie die zu verwendende Wassermenge vorwählen lassen. Die Wassermenge wird dabei dadurch bestimmt, dass das Wasser mit einem konstanten Druck über eine bestimmte Zeit zugeführt wird. Die Einstelleinrichtung ist Teil einer Steuervorrichtung die dann den Ablauf der Kaffeebereitung steuert. Ein Nachteil besteht darin, dass unterschiedliche Kaffeesorten oder unterschiedliche Mahlgrade des Kaffeemehls ein unterschiedliches Kaffeemehl ergeben, das dem mit konstantem Druck über eine bestimmte Zeit zugeführten Brühwasser mehr oder weniger Durchflusswiderstand entgegensetzt, wodurch die bereitete Kaffeemenge unterschiedlich sein kann. Es können auch Tassen unterschiedlicher Volumina zur Verwendung kommen, wodurch ein Überlaufen oder eine Unterfüllung auftreten kann.

Das Problem der Abgabe unterschiedlicher Kaffeemengen und unterschiedlicher Füllungen der Tassen tritt verstärkt auf bei Kaffeemaschinen bei denen das Kaffeemehl vom Benutzer in einen Filter eingegeben wird. Der Durchflusswiderstand kann dabei zusätzlich durch eine unterschiedliche Pressung des Kaffeemehls im Filter sehr unterschiedlich sein.

Der Benutzer verwendet üblicherweise unterschiedliche Tassen für verschiedene Arten von Kaffee wie Espresso, verlängerten Espresso oder Filterkaffee. Die bekannten Maschinen erkennen nicht, ob ein falsches, nicht zu den sonstigen Vorgaben passendes Auffanggefäß untergestellt ist oder dieses falsch untergestellt oder überhaupt kein Gefäß untergestellt ist, so dass der Kaffee ganz oder teilweise in die Abtropfschale unter der Stellfläche auslaufen kann.

Der vorliegenden Erfindung liegt die Aufgabe zugrunde einen Getränkebereiter nach dem Oberbegriff des Anspruches 1 oder 5 zu schaffen, bei dem die Nachteile des bekannten Standes der Technik vermieden werden und insbesondere die Bedienungsbequemlichkeit und/oder die Betriebssicherheit erhöht sind.

Diese Aufgabe wird gelöst durch einen Getränkebereiter mit der Merkmalskombination des Anspruches 1. Diese Lösung hat den Vorteil, dass ein Überlaufen des Auffanggefäßes und lästige Reinigungsarbeit erspart werden können. Der Kennwert für die Größe des Auffanggefäßes z.B. dessen Höhe und/oder Gewicht kann vom Gerät gemessen oder gemäß einer einfacheren Ausführungsform vom Benutzer als Vorgabe über die Eingabeeinrichtung eingegeben werden. Hierzu kann das Gerätegehäuse eine Messskala aufweisen mit der die Tassenhöhe für die Handeingabe messbar ist. Mit dem untergestellten Auffanggefäß kann in der Steuervorrichtung schon eine Vorwahl der zuzubereitenden Getränkmenge und eventuell der Getränkart erfolgen, wodurch der Benutzer Einstellarbeit spart und die Bedienung vereinfacht ist. Z.B. wird bei eine Kaffeemaschine mit zwei Kaffeemehlvorratsbehältern einer kleinen Espressotasse ein Espressokaffeemehl und eine geringer Flüssigkeitsdurchsatz zugeordnet, während einer größeren Kaffeetasse ein Filterkaffeemehl und ein größerer Flüssigkeitsdurchsatz zugeordnet sein können. Die Betriebsart des Gerätes kann zwischen dem bekannten und dem erfindungsgemäßen Verfahren umschaltbar sein.

Die Steuervorrichtung umfasst vorzugsweise einen Langzeit-Datenspeicher, der verknüpft mit mindestens einem Kennwert für die Größe des Auffanggefäßes, zugeordnete andere Vorgaben, insbesondere für den Flüssigkeitsdurchsatz speichert. Dabei ist gemäß einer bevorzugten Ausführungsform mittels der Eingabeeinrichtung eine Programm- bzw. Benutzerkennung einspeicherbar, die im Langzeit-Datenspeicher zugeordnete Vorgaben und damit verknüpfte Daten identifiziert zum Aufruf durch Eingabe der Programm- bzw. Benutzerkennung bei erneuter Benutzungen des Getränkebereiters. Hierdurch werden die Bedienungsbequemlichkeit und die Betriebssicherheit weiter erhöht. Der Inhalt des Speichers bleibt auch bei ausgeschaltetem Gerät erhalten. Er kann vom Hersteller eingegebene, durch Eingabe der Programmkennung wieder aufrufbare Grundeinstellungen bzw. Vorgaben, vom Verkäufer oder Käufer eingegebene Vorgaben zur Anpassung an regionale Gewohnheiten und schließlich verschiedenen Benutzern zugeordnete Einstellungen bzw. Vorgaben aufnehmen. Anhand des Gefäßkennwertes und der Programm- bzw. Benutzerkennung können die übrigen Vorgaben z.B. Flüssigkeitsmenge oder Füllstand und Art des Aromaträgers z.B. Kaffeemehls oder Suppenbrühpulvers für einen Bereitungsvorgang aus dem Speicher aufgerufen werden. Die abgegebene Getränkmenge wird bestimmt durch den von der Steuervorrichtung gesteuerten Flüssigkeitsdurchsatz, vorzugsweise mit Messung des Füllstandes im Auffanggefäß oder etwas ungenauer durch Steuerung der Zeit der Flüssigkeitsförderung.

Die der Erfindung zugrundeliegende Aufgabe wird ferner ebenfalls gelöst durch einen Getränkebereiter mit der Merkmalskombination des Anspruches 5 Vorteilhafterweise besitzt der Getränkebereiter in diesem Fall eine Messeinrichtung, mittels der mindestens ein Kennwert des Auffanggefäßes und/oder der Füllstand im Auffanggefäß erfassbar sind, wobei die Steuervorrichtung deren Messergebnis insbesondere zur Steuerung des Flüssigkeitsdurchsatzes berücksichtigt. Für diese Ausführungsformen wird ein selbständiger Schutz beansprucht. Das Messergebnis kann mehrere verschiedene Messwerte umfassen. Der Kennwert des Auffanggefäßes, z.B. Höhe oder Gewicht, kann einen Hinweis auf das Fassungsvermögen des Gefäßes geben. Die Messeinrichtung ist vorzugsweise ein Teil der Steuervorrichtung, die die Messung bewirkt und die Messwerte unmittelbar verarbeitet. Eine Erfassung des Kennwerts für die Größe des jeweils untergestellten Auffanggefäßes hat den Vorteil, dass ohne untergestelltes Gefäß der Bereitungsvorgang verhindert werden kann, was die Betriebssicherheit erhöht. Die Messeinrichtung umfasst hierzu vorzugsweise einen hier als Gefäßsensor bezeichneten Sensor z.B. einen Ultraschall- oder Infrarotsensor für den Kennwert des Gefäßes, z.B. dessen Höhe und/oder dessen Gewicht. Jedoch kann der Kennwert des Gefäßes auch mittels einer Messeinrichtung in Form einer z.B. am Gerätegehäuse angeordneten Messskala festgestellt und über die Eingabeeinrichtung von Hand eingegeben werden. Es ist auch möglich die mit dem Getränkebereiter verwendeten Auffanggefäße jeweils mit einer passenden Kennmarke zu versehen, von der die Steuervorrichtung den Kennwert des Gefäßes mittels eines einfachen Sensors leicht ablesen kann.

Die Messeinrichtung kann mindestens einen, einen Teil der Steuervorrichtung bildenden Füllstandssensor zur Messung des Füllstandes im Auffanggefäß aufweisen, was den wesentlichen Vorteil einer genaueren Bemessung der gewünschten Getränkmenge ergibt gegenüber der Laufzeitsteuerung der Fördereinrichtung und den Komfort und die Betriebssicherheit erhöht. Dadurch dass unabhängig vom Mahlgrad des Kaffeemehls und dessen Pressung im Filter eine bestimmte Getränkmenge bereitet wird, erzielt man auch eine gleichmäßigere Ausnutzung des Aromaträgerstoffes bzw. der Brühsubstanz z.B. des Kaffeemehls, Löskaffeepulvers, Tees oder Suppenbrühpulvers und zuverlässiger den gewünschten Geschmack. Der Füllstandssensor kann dabei einen Näherungssensor z.B. einen Ultraschallsensor mit einem neben dem Auslauf nach unten gerichteten. Messstrahl aufweisen, der die Höhe der Oberfläche des Getränks im Auffanggefäß recht genau misst. Die Messeinrichtung kann auch mindestens eine, vorzugsweise vertikale Reihe von, mit einer Seitenwand des Auffanggefäßes zusammenwirkenden, Sensoren, z.B. Infrarotsensoren aufweisen, was einen niedrigeren Fertigungsaufwand bedeuten kann. Mit Infrarotsensoren lässt sich sowohl die Höhe des Gefäßes als auch, als Temperatursprung dessen Füllstand an der Gefäßseitenwand messen.

Als Messeinrichtung sowohl für das Auffanggefäß als auch für dessen Füllstand kann auch die Trägerfläche für das Auffanggefäß dienen und hierzu als Waage ausgebildet sein. Dies bietet eine Zusatzfunktion allgemein als Waage, wenn eine Anzeigeeinrichtung vorhanden ist.

Wenn die Messeinrichtung einen, einen Teil der Steuervorrichtung bildenden Sensor aufweist, der in Kombination sowohl als Gefäßsensor als auch als Füllstandssensor dient, was den Fertigungsaufwand senkt, wird dieser vorzugsweise von der Steuervorrichtung zeitlich nacheinander in seinen beiden Funktionen benutzt, was zum Teil diese Doppelfunktion erst möglich macht.

Durch ein Gebläse zur Entfernung von Dampf zwischen der Messeinrichtung und der Messstelle kann die Messsicherheit erhöht werden; eventuell auch dadurch, dass die Flüssigkeitsförderung und die Messungen intermittierend erfolgen um Messfehler durch herumspritzende Tropfen oder eine aufwendigere Auswertelektronik zu deren Eliminierung zu vermeiden.

Ein höhenverstellbarer Auslauf kann ebenfalls als Messeinrichtung dienen für die Höhe des Randes des untergestellten Auffanggefäßes als Kennwert für die Größe des Auffanggefäßes. Dabei kann der Auslauf von Hand auf die richtige Höhe eingestellt werden und im einfachsten Fall ein Messwert zur Handeingabe von einer Skala, z.B. am Auslauf ablesbar sein oder in einer Anzeigeeinrichtung angezeigt werden. Vorzugsweise ist diese Messeinrichtung jedoch ein Teil der Steuervorrichtung, die den Messwert direkt erhält und verarbeitet. Im unteren Bereich des höhenverstellbaren Auslaufes kann an diesem ein Gefäßrandsensor angeordnet sein, der quer zur Vertikalrichtung misst um bei der Abwärtsbewegung des Auslaufes den Gefäßrand festzustellen und anzuzeigen und/oder der Steuervorrichtung zu melden. Die Höhenposition des Auslaufs kann zur Messung mittels eines Stellmotors von der Steuervorrichtung mit Hilfe des Gefäßrandsensors auf die richtige Höhe relativ zum untergestellten Auffanggefäß einstellbar sein, was den Zusatznutzen des automatisch eingestellten Auslaufes und Vermindern des Verspritzens bei der Gertränkabgabe besitzt.

Als Vorgabe für den Flüssigkeitsdurchsatz kann ein Prozentsatz der Höhe des Auffanggefäßes als gewünschter Füllstand oder ein gewünschter Abstand des Füllstandes unter dem Rand des Auffanggefäßes einspeicherbar sein.

Alternativ kann als Vorgabe für den Flüssigkeitsdurchsatz der, in einem der Programmierung dienenden Bereitungsvorgang mit Handsteuerung erreichte Füllstand im Auffanggefäß oder die dafür verwendete Flüssigkeitsförderzeit einspeicherbar sein. Ein Verfahren zur Benutzung des Getränkebereiters ist am Ende der Figurenbeschreibung beschrieben.

Im folgenden wird die Erfindung anhand schematischer Zeichnungen an Ausführungsbeispielen näher erläutert.

Es zeigt:
- Fig. 1: eine Seitenansicht eines elektrischen Espresso-Vollautomaten;
- Fig. 2: ausschnittsweise eine Vorderansicht des Espresso-Vollautomaten der Fig. 1, von links in Fig. 1 gesehen, wobei der Auslauf eine andere Höhenstellung einnimmt und untergestellte Tassen nur angedeutet sind und
- Fig. 3: ausschnittsweise eine Seitenansicht eines abgewandelten Espresso-Vollautomaten.

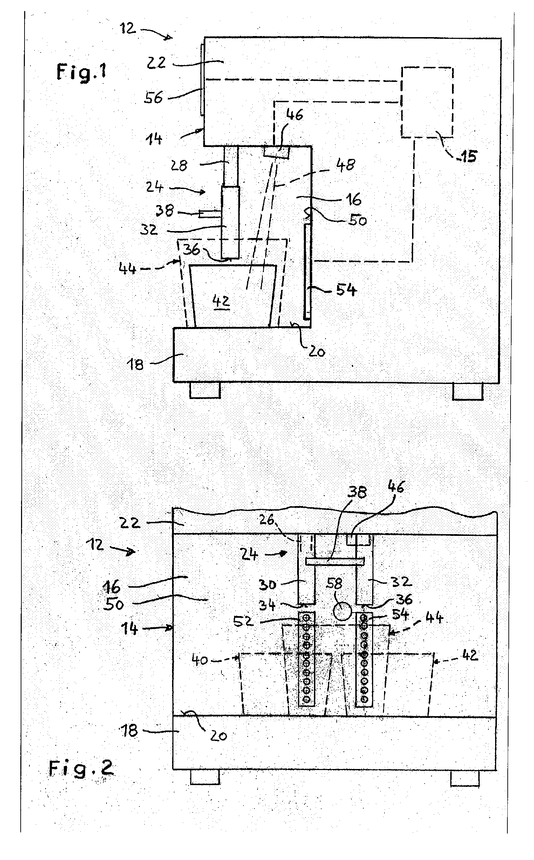

Der in den Figuren 1 und 2 dargestellte elektrische Espresso-Vollautomat 12 besitzt ein im wesentlichen säulenförmiges Gerätegehäuse 14, in dem ein Espresso-Kaffeebohnenvorratsbehälter, ein Mahlwerk, ein Vorratsbehälter für ein Kaffeemehl einer anderen Kaffeeart, ein Wassererhitzungssystem, eine Pumpe und eine Brüheinheit, die hier nicht dargestellt sind, sowie eine Steuervorrichtung 15 angeordnet sind. Das Gerätegehäuse 14 besitzt an seiner in Fig. 1 nach links gewandten Frontseite eine sich über seine ganze Breite erstreckende, einen Teil seiner Höhe einnehmende Nische 16 und darunter ein Trägerteil 18, dessen, die Nische 16 nach unten begrenzende Oberseite als Trägerfläche 20 für Auffanggefäße ausgebildet ist. Die horizontale Trägerfläche 20 besitzt in üblicher, nicht dargestellter Weise einen Gitterrost über einer Abtropfschale im Trägerteil 18.

Über der Nische 16 besitzt das Gerätegehäuse 14 einen nach vorn vorspringenden Kopfteil 22, von dessen Unterseite ein Doppel-Auslauf 24 vertikal nach unten in die Nische 16, im mittleren Bereich der Breitenerstreckung der Nische 16 und der Tiefenerstreckung der Trägerfläche 20 vorspringt. Dieser Doppel-Auslauf 24 besitzt zwei aus dem Kopfteil 22 austretende vertikale Innenrohre 26 und 28 auf denen Außenrohre 30 und 32 mit leichter Reibung höhenverschiebbar geführt sind, die an ihren unteren Enden offen sind und Auslauföffnungen 34 und 36 bilden. Die Außenrohre 30 und 32 sind durch einen nach vorn ragenden Handgriff 38 verbunden, mittels dem sie aus der in Fig.1 dargestellten unteren Stellung zur spritzfreien Befüllung kleinerer Espressotassen 40 und 42 stufenlos bis in eine in Fig. 2 dargestellte obere Betriebsstellung zur Befüllung mindestens einer größeren Tasse 44 verstellbar sind.

An der Unterseite des Kopfteils 22 ist hinter dem rechten Innenrohr 28 des Doppel-Auslaufes 24 und in einem Abstand von diesem ein als Füllstandssensor dienender Ultraschallsensor 46 angeordnet, der einen schmalen Messstrahl 48 in ein unter das rechte Außenrohr 32 gestelltes Auffanggefäß, Tasse 42, oder ein mittig unter den Doppel-Auslauf 24 gestelltes Auffanggefäß, Tasse 44, richtet um als Näherungssensor zu messen, welche Höhe die Oberfläche des Getränks in dem Auffanggefäß erreicht hat. Die Nische 16 besitzt eine vertikale Rückwand 50 an deren Frontseite jeweils im Bereich des linken und dem rechten Außenrohres des Doppel-Auslaufes 24 eine vertikale Sensorleiste 52 bzw. 54 angeordnet sind. Diese auch als Array bezeichneten Sensorleisten 52 und 54 besitzen übereinander eine Reihe von aktiven Infrarotsensoren, die ihre Messstrahlen horizontal nach vorn gegen ein zentral untergestelltes Auffanggefäß 44 oder zwei nebeneinandergestellte Auffanggefäße 40 und 42 richten und deren Vorhandensein und Höhe feststellen. Die Sensorleisten 52 und 54 erstrecken sich von nahe der Stellfläche 20 bis zur Höhe des höchsten unterstellbaren Auffanggefäßes und bilden zusammen mit dem Ultraschallsensor 46 einen Teil der Steuervorrichtung 15. Einen weiteren Teil der Steuervorrichtung bildet eine an der Frontseite des Kopfteils 22 des Gerätegehäuses 14 angeordnete Eingabeeinrichtung 56 in Form eines Tastenfeldes, zu dem eine Anzeigevorrichtung bzw. ein Display für eine Dialogbedienung gehören kann. Damit kann der der Benutzer der Steuervorrichtung Vorgaben eingeben, die für einen einzelnen Brühvorgang gelten oder für weitere Brühvorgänge in einen Langzeit-Datenspeicher der Steuervorrichtung eingespeichert werden. Dabei können verschiedene Benutzer verschiedene Vorgaben einstellen und werden anhand einer einzugebenden Benutzerkennung z.B. in Form einer Ziffern- oder Buchstabenkombination erkannt, um die gespeicherten Werte für einen erneuten Brühvorgang aufzurufen. Es können für unterschiedlich hohe Tassen, d.h. verschiedene Tassentypen unterschiedliche Werte eingespeichert werden. Die Steuervorrichtung kann mittels der Sensorleisten 52 und 54 die Tassenhöhe erkennen und dem Benutzer bei erneuter Benutzung des Gerätes bei der Einstellung z.B. über ein Dialogfeld bereits eine Vorgabe machen, die verwendet wird, wenn der Benutzer nicht eine abweichende Vorgabe macht. Die mit Hilfe der Sensoren 46, 52 und 54 ablaufende Automatik kann auch ausgeschaltet werden und die Maschine besitzt auch die üblichen Einstellmöglichkeiten für einen konventionellen Betrieb. Wenn die Sensorleisten 52 und 54 erkennen, dass nur eine Tasse, z.B. die Tasse 40, einseitig untergestellt wurde, wird die Getränkeausgabe blockiert und in dem Dialogfeld eine entsprechende Anzeige gegeben. Das gleiche gilt, wenn gar kein Auffanggefäß untergestellt wurde.

Der Ultraschallsensor 46 misst die Höhe des Füllstandes und meldet ihn an die Steuervorrichtung, die ihn mit der von den Sensorleisten 52 und 54 gemeldeten Höhe des Auffanggefäßes vergleicht. Je nach eingespeicherter Vorgabe des Benutzers wird das Auffanggefäß jeweils bis zu einem gewissen Prozentsatz seiner Höhe oder einem gewissen Abstand unter dem Rand gefüllt. Die Sensor-Automatik bleibt vorzugsweise auch wenn der Benutzer keine individuellen Vorgaben eingibt eingeschaltet und greift auf Fabrikvorgaben oder andere allgemeinere Vorgaben zurück und verhindert ein Überlaufen des Auffanggefäßes.

Der Ultraschallsensor 46 ist von vorn gesehen hinter dem rechten Auslauf 32 angeordnet um sowohl den Füllstand in einer zentral unter dem Doppel-Auslauf 24 angeordneten Auffanggefäß, Tasse 44 oder in einer der beiden nebeneinander aufgestellten Tassen 40 und 42 messen zu können. Von vorne gesehen geht der Messstrahl 48 senkrecht nach unten und ist in Fig. 2 weggelassen, um die Darstellung übersichtlicher zu halten. In einer Höhe etwas über dem höchsten normalerweise verwendeten Auffanggefäß besitzt die Rückwand 50 der Nische 16 eine Lüftungsöffnung 58 durch die mittels eines nicht dargestellten Gebläses im Gerätegehäuse 14 Luft angesaugt wird. Hierdurch wird über den Auffanggefäßen eine Luftströmung erzielt, die aufsteigende Dämpfe absaugt, die die Messung mit dem Ultraschallsensor 46 behindern könnten. Es ist auch denkbar, die Getränkförderung und die Messung mittels des Sensors 46 alternierend einzuschalten, um die Messung nicht durch das austretende Getränk oder auffliegende Tropfen zu behindern. Hierdurch kann die die Messergebnisse auswertende Elektronik der Steuervorrichtung einfacher und preiswerter ausgeführt werden.

Die Sensorleisten 52 und 54 können, abweichend von der Darstellung in Figur 2, von vorn gesehen ein Stück zur Seite gegen die Außenrohre 30 und 32 des Doppelauslaufes 24 versetzt sein, damit diese die Messung nicht stören, wenn sie zur Befüllung kleiner Tassen weit nach unten gezogen sind. Es können auch horizontale Sensorleisten vorhanden sein um als weiteren Kennwert die Breite der Gefäße zu messen.

Gemäß einer abgewandelten Ausführungsform kann der Ultraschallsensor 46 entfallen. Dann sind die Infrarotsensoren und die zugehörige Auswert-Elektronik der Steuervorrichtung so gestaltet, dass sie auch den Temperaturverlauf über die Höhe der Außenseite des Auffanggefäßes erkennen und aus der Höhe des dort durch das Getränk bewirkten Temperatursprunges die Füllhöhe berechnen. Dabei kann eine zeitliche Umschaltung vorgesehen sein, so dass zunächst die Höhe des Auffanggefäßes gemessen wird und nach dem Beginn des Brühvorganges eine Umschaltung auf die Messung des Füllstandes erfolgt.

Gemäß einer weiteren alternativen Ausführungsform können die Sensorleisten 52 und 54 entfallen. Der Messstrahl des Ultraschallsensors 46 wird dann entweder etwas breiter ausgelegt oder so gerichtet, dass er auch die Tassenränder mit erfasst. Die Auswertelektronik der Steuervorrichtung muss dann sie die Echos aus verschiedenen Höhen unterscheiden und einerseits die Tassenhöhe und andererseits den Füllstand feststellt. Auch hier kann die Auswertung der Messung in zeitlich nacheinanderliegenden Phasen erfolgen, wobei zunächst die Tassenhöhe und dann der Füllstand gemessen werden.

Gemäß einer weiteren Abwandlung kann der Sensor 46 wie in Fig.1 dargestellt mit einem schmalen Messstrahl 48 ausgebildet sein und nur als Füllstandssensor dienen und zusätzlich ein zweiter hier nicht dargestellter Ultraschallsensor als Gefäßsensor an der Unterseite des Kopfteils 22 neben dem Sensor 46 angeordnet sein, der mehr in die Bereiche der Tassenränder gerichtet ist und immer nur das erste Echo auswertet. Dies kann aufgrund einer einfacheren Auswertelektronik preiswerter sein. Auch in diesem Fall entfallen die Infrarot-Sensorleisten 52 und 54. Bei dieser Verwendung einer Kombination aus zwei Ultraschallsensoren, die oberhalb der Stellfläche für die Auffanggefäße eingebaut sind, handelt es sich um einen als Gefäßsensor dienenden Abstandssensor, der die Höhe des Auffanggefäßes misst und einen als Füllstandssensor dienenden Näherungssensor. Die Steuervorrichtung steuert die Ausgabemenge so, dass die Tasse jeweils optimal z.B. bis 0,5 cm unterhalb der Tassenoberkante befüllt wird. Das individuelle Optimum wird vom Benutzer ausgewählt und vorzugsweise für einen späteren Aufruf eingespeichert. Hierbei können verschiedene Optima in Abhängigkeit von dem ausgegebenen Getränk z.B. Espresso, verlängertem Espresso oder Filterkaffe eingestellt werden. Der Füllstand im Auffanggefäß wird durch eine Differenzmessung zwischen dem Wert des Gefäßsensors, der den Abstand zum Rand des Auffanggefäßes bzw. dessen Höhe erfasst und dem Füllstandssensor oder Näherungssensor, der den jeweiligen Füllstand des Auffanggefäßes mit dem ausgegebenen Getränk erfasst ermittelt. Die Rechenoperationen werden von der Steuervorrichtung durchgeführt. Die durch die nicht exakt gleichen Sensorpositionen bedingte Parallaxe wird bei der Geräteentwicklung definiert und als konstante Korrektur in den Auswertealgorithmus eingegeben. Sobald die Differenzmessung den Wert des vom Benutzer eingegebenen Füllstandsoptimums d.h. der Füllstandsvorgabe ergibt, wird die Getränkausgabe gestoppt.

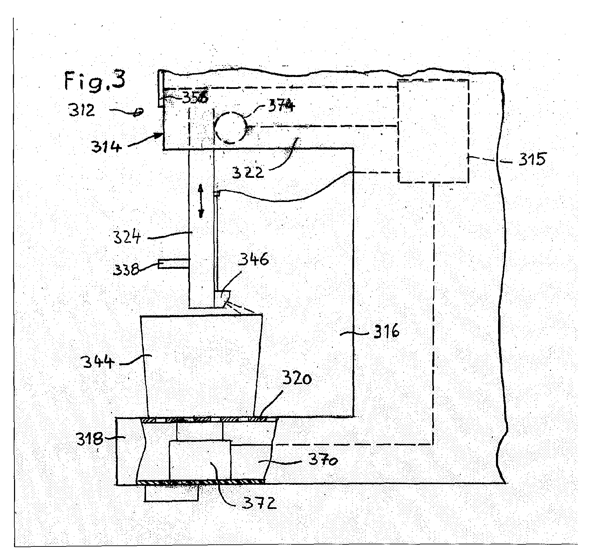

Der in Fig.3 dargestellte abgewandelte elektrische Espresso-Vollautomat 312 besitzt ein Gerätegehäuse 314 in dem eine Steuervorrichtung 315 und die gleichen nicht dargestellten Einrichtungen angeordnet sind, wie bei der Ausführungsform gemäß den Figuren 1 und 2. Das Gerätegehäuse 314 besitzt eine sich über seine ganze Breite erstreckende, einen Teil seiner Höhe einnehmende Nische 316 und darunter ein Trägerteil 318, dessen die Nische 316 nach unten begrenzende Oberseite als gelochte Trägerplatte 320 für ein Auffanggefäß z.B. in Form einer Tasse 344 ausgebildet ist. Darunter ist in dem Trägerteil 318 eine Tropfschale 370 ausgebildet. Darin ist ein Gewichtssensor 372 angeordnet, der die Lochplatte 320 mit dem darauf gestellten Auffanggefäß bzw. der Tasse 344 trägt und das Gewicht der Tasse im leeren Zustand und mit zunehmendem Getränkepegel misst und das Messergebnis zur Auswertung an die Steuervorrichtung 315 weitergibt.

Über der Nische 316 besitzt das Gerätegehäuse 314 einen nach vorn vorspringenden Kopfteil 322.Von der Unterseite des Kopfteils 322 ragt ein Auslaufrohr 324 senkrecht nach unten in die Nische 316 und ist mittels eines, im Kopfteil 322 angeordneten elektrischen Stellmotors 374 höhenverschiebbar, der von der Steuervorrichtung 315 betätigt wird. Am unteren Ende trägt das Auslaufrohr 324 als Gefäßrandsensor 346 einen aktiven Infrarotsensor der seinen Messstrahl vorwiegend nach hinten in die Nische 316 und leicht nach unten richtet. Wenn die Steuervorrichtung das Signal erhält, dass der Tassenrand erreicht ist, stoppt sie den Stellmotor 374 und berechnet aus dem Hub bzw. der Dauer der Stellbewegung die Höhe des untergestellten Auffanggefäßes bzw. der Tasse 344. Anschließend wird die Kaffeeförderung in Gang gesetzt und die Tasse 344 bis zu dem vom Benutzer vorgegebenen Höhe gefüllt, wobei das Füllen über den Gewichtssensor 372 von der Steuervorrichtung kontrolliert wird.

Um die Vorgaben in die Steuervorrichtung einzuspeichern bzw. die Automatik zu programmieren und zu benutzen kann das folgende Arbeitsverfahren angewendet werden Der Benutzer stellt in einem Programmierlauf bzw. Musterlauf ein Auffanggefäß z.B. die Tasse 344 unter das Auslaufrohr 324 und setzt das Gerät in Gang, worauf die Steuervorrichtung 315 mittels des Stellmotors 374 das Auslaufrohr 324 nach unten bewegt bis der Gefäßrandsensor 346 den Rand der Tasse 344 erfasst hat. Die Steuervorrichtung 315 berechnet aus der Höhe der Hubbewegung die Höhe der Tasse 344. Zur gleichen Zeit stellt die Steuervorrichtung 315 über den Gewichtssensor 372 auch das Leergewicht der Tasse 344 fest. Anschließend setzt der Benutzer die Flüssigkeitsförderung in Gang und stoppt diese sobald der von ihm gewünschte Füllstand in der Tasse 344 erreicht ist. Die Steuervorrichtung 315 speichert dann das so erreichte Gewicht der befüllten Tasse 344 als Vorgabewert zusammen mit der gemessenen Höhe der Tasse 344 und einer eingegebenen Benutzerkennung ab. Ferner kann der Benutzer dazu einspeichern, ob es sich um Espresso oder Filterkaffee handelt. Sobald der Benutzer ein nächstes Mal Kaffee bereitet, kann er die Automatik einschalten, seine Benutzerkennung eingeben und ein gewünschtes Auffanggefäß unterstellen. Die Steuervorrichtung fährt dann das Auslaufrohr 324 mittels des Stellmotors nach unten bis der Gefäßrandsensor 346 den Rand des Auffanggefäßes 344 erfasst und meldet. Aus dem Hub und dem vom Gewichtssensor 372 festgestellten Gewicht weiß die Steuervorrichtung, um welche Art Auffanggefäß es sich handelt und befüllt dieses mit Hilfe des Gewichtssensors 372 mit der gewünschten Kaffeeart auf den gespeicherten Vorgabefüllstand entsprechend dem Programmierlauf. In diesem Fall können auch Auffanggefäße unterschiedlicher Breite und zufällig gleicher Höhe verwendet werden, da nicht nur die Höhe des Auffanggefäßes 344 mittels des Gefäßsensors 346 sondern zusätzlich auch das Gewicht des Gefäßes erfasst wird, was zu unterschiedlichen aufrufbaren Speichermustern bzw. Kennwertmustern führt. Alternativ zu der Programmierung in einem Programmierlauf können Füllstandswerte auch als Prozentsatz der inneren Höhe des Auffanggefäßes oder mit einem bestimmten Abstand zum Gefäßrand von Hand über die Eingabeeinrichtung eingespeichert werden.

Gemäß einer ersten vereinfachten Ausführungsform des Automaten gemäß Fig.3 ist auf den Stellmotor verzichtet und das Auslaufrohr 324 wird vom Benutzer am Handgriff 328 nach unten geschoben bis der Gefäßsensor 346 den Tassenrand feststellt und über die Steuervorrichtung ein Signal auf der Eingabeeinrichtung bewirkt. Die Steuervorrichtung misst diesen Hub, berechnet daraus die Höhe des Auffanggefäßes. Gemäß einer weiteren Vereinfachung kann auch der Gefäßrandsensor in Form des Infrarotsensors 346 entfallen. Der Benutzer schiebt dann das Auslaufrohr 324 bis knapp über den Rand des Auffanggefäßes 344 und schaltet dann den Bereitungsvorgang ein. Die Steuervorrichtung berechnet aus dem Hub bzw. der Höhenstellung des Auslaufrohres die Höhe des Auffanggefäßes 344. In weiterer Vereinfachung kann das Auslaufrohr auch wie eine Schieblehre eine Messskala aufweisen, an der der Benutzer nach der Absenkung die Höhe des Auffanggefäßes abgelesen kann, um sie dann von Hand über die Eingabeeinrichtung als Vorgabekennwert einzugeben.

Ferner kann auch der Gewichtssensor 372 entfallen. Die Programmierung der gespeicherten Vorgaben insbesondere für den Flüssigkeitsdurchsatz geschieht auch in diesem Fall etwa gemäß dem vorstehend beschriebenen Arbeitsverfahren in einem Programmierbetrieb. Dabei wird jedoch an Stelle eines Gewichts des befüllten Gefäßes die bis zum Stop durch den Benutzer bestimmte Flüssigkeitsförderzeit gespeichert, was zu etwas ungenaueren Füllstandsergebnissen führt, als eine Füllstandsmessung und - Speicherung. In weiterer Abwandlung kann im Gehäuse des Gefäßrandsensors 346 auch ein nach unten gerichteter Näherungssensor zur Füllstandsmessung angeordnet sein.

### Bezugszeichen

- 12: Espresso-Vollautomat
- 14: Gerätegehäuse
- 15: Steuervorrichtung
- 16: Nische
- 18: Trägerteil
- 20: Trägerfläche
- 22: Kopfteil
- 24: Doppel-Auslauf
- 26: Innenrohr
- 28: Innenrohr
- 30: Außenrohr
- 32: Außenrohr
- 34: Auslauföffnung
- 36: Auslauföffnung
- 38: Handgriff
- 40: Espresso-Tasse
- 42: Espresso-Tasse
- 44: größere Tasse
- 46: Ultraschallsensor (Füllstandssensor)
- 48: Messstrahl
- 50: Rückwand der Nische
- 52: Sensorleiste (Gefäßsensor)
- 54: Sensorleiste (Gefäßsensor)
- 56: Eingabeeinrichtung
- 58: Lüftungsöffnung
- 312: Espresso-Vollautomat
- 314: Gerätegehäuse
- 315: Steuervorrichtung
- 316: Nische
- 318: Trägerteil
- 320: Trägerplatte
- 322: Kopfteil
- 324: Auslaufrohr
- 338: Handgriff
- 344: Tasse, Auffanggefäß
- 346: Gefäßrandsensor, (Infrarotsensor)
- 356: Eingabeeinrichtung
- 370: Tropfschale
- 372: Gewichtssensor
- 374: Stellmotor

## Patentansprüche

1. Getränkebereiter, insbesondere eine Kaffeemaschine (12; 312), wobei zur Bereitung eines Getränks Wasser vorzugsweise einem Aromatauscher, und das Getränk daraus einem Auslauf (24; 324) über einer Trägerfläche (20;320) für ein Auffanggefäß (40, 42, 44; 344) zugeführt wird, und dieser Flüssigkeitsdurchsatz von einer Steuervorrichtung (15; 315) gesteuert ist, **dadurch gekennzeichnet, dass** die Steuervorrichtung (15; 315) mindestens einen Kennwert des jeweils untergestellten Auffanggefäßes (40, 42, 44; 344) berücksichtigt.

2. Getränkebereiter nach Anspruch 1, **dadurch gekennzeichnet, dass** die Steuervorrichtung (15; 315) einen Langzeit-Datenspeicher umfasst, der verknüpft mit mindestens einem Kennwert für die Größe des Auffanggefäßes (40, 42, 44; 344), diesem zugeordnete Vorgaben, insbesondere für den Flüssigkeitsdurchsatz speichert.

3. Getränkebereiter nach Anspruch 1 oder 2, **dadurch gekennzeichnet, dass** mittels einer Eingabeeinrichtung (56; 356) eine Programm- oder Benutzerkennung einspeicherbar ist, die im Langzeit-Datenspeicher zugeordnete Vorgaben und damit verknüpfte Daten identifiziert zum Aufruf durch Eingabe der Programm- oder Benutzerkennung bei erneuter Benutzungen des Getränkebereiters.

4. Getränkebereiter nach einem der Ansprüche 1 bis 3, **dadurch gekennzeichnet, dass** mindestens ein Kennwert für die Größe des untergestellten Auffanggefäßes, z.B. dessen Höhe und/oder Gewicht, vom Benutzer mittels der Eingabeeinrichtung eingebbar ist.

5. Getränkebereiter insbesondere nach einem der Ansprüche 1 bis 4, z.B. eine Kaffeemaschine (12; 312), wobei zur Bereitung eines Getränks Wasser vorzugsweise einem Aromatauscher und das Getränk daraus einem Auslauf (24; 324) über einer Trägerfläche (20;320) für ein Auffanggefäß (40, 42, 44; 344) zugeführt wird und dieser Flüssigkeitsdurchsatz von einer Steuervorrichtung (15; 315) gesteuert ist, **gekennzeichnet durch** eine Messeinrichtung (46, 52, 54; 324, 346, 372), mittels der mindestens ein Kennwert des Auffanggefäßes (40, 42, 44; 344) und/oder der Füllstand im Auffanggefäß (42, 44; 344) erfassbar sind, wobei die Steuervorrichtung (15; 315) deren Messergebnis berücksichtigt.

6. Getränkebereiter nach Anspruch 5, **dadurch gekennzeichnet, dass** mittels der Messeinrichtung (52, 54, 324, 372) der Kennwert des jeweils untergestellten Auffanggefäßes (40, 42, 44; 344) ermittelt wird.

7. Getränkebereiter nach Anspruch 6, **dadurch gekennzeichnet, dass** die Messeinrichtung (46, 52, 54, 324, 372) mindestens einen, einen Teil der Steuervorrichtung (15; 315) bildenden Gefäßsensor (52, 54, 324, 372) für mindestens einen Kennwert des Auffanggefäßes (40, 42, 44; 344), wie dessen Höhe und/oder Gewicht aufweist.

8. Getränkebereiter nach einem der Ansprüche 5 bis 7, **dadurch gekennzeichnet, dass** die Messeinrichtung. mindestens einen, einen Teil der Steuervorrichtung (15) bildenden Füllstandssensor (46) zur Messung des Füllstandes in einem untergestellten Auffanggefäß (42, 44) aufweist

9. Getränkebereiter nach Anspruch 8, **dadurch gekennzeichnet, dass** der Füllstandssensor einen Näherungssensor z.B. einen Ultraschallsensor (46) mit einem neben dem Auslauf (24) nach unten gerichteten Messstrahl (48) aufweist, der die Höhe der Oberfläche des Getränks im Auffanggefäß (42, 44) misst.

10. Getränkebereiter nach einem der Ansprüche 5 bis 9, **dadurch gekennzeichnet, dass** die Messeinrichtung mindestens eine Reihe von Sensoren, z.B. Infrarotsensoren (Sensorleisten 52, 54) aufweist, die einen Teil der Steuervorrichtung (15) bildenden und mit einer Seitenwand des Auffanggefäßes (40, 42, 44) zusammenwirken.

11. Getränkebereiter nach einem der Ansprüche 5 bis 10, **dadurch gekennzeichnet, dass** als Messeinrichtung die Trägerfläche (320) für das Auffanggefäß (344) dient und hierzu als Waage (Gewichtssensor 372) ausgebildet ist.

12. Getränkebereiter nach einem der Ansprüche 5 bis 11, **dadurch gekennzeichnet, dass** die Messeinrichtung einen, einen Teil der Steuervorrichtung (15) bildenden Sensor (Infrarot-Sensorleisten 52, 54) aufweist, der in Kombination sowohl als Gefäßsensor als auch als Füllstandssensor dient.

13. Getränkebereiter nach Anspruche 12, **dadurch gekennzeichnet, dass** der kombinierte Sensor (Infrarot-Sensorleisten 52, 54) von der Steuervorrichtung (15) zeitlich nacheinander in seinen beiden Funktionen benutzt wird.

14. Getränkebereiter nach einem der Ansprüche 5 bis 13, **gekennzeichnet durch** ein Gebläse (Lüftungsöffnung 58) zur Entfernung von Dampf zwischen der Messeinrichtung (46, 52, 54) und der Messstelle.

15. Getränkebereiter nach einem der Ansprüche 5 bis 14, **dadurch gekennzeichnet, dass** die Flüssigkeitsförderung und die Messungen intermittierend erfolgen.

16. Getränkebereiter nach einem der Ansprüche 5 bis 15, mit einem höhenverstellbaren Auslauf (324), **dadurch gekennzeichnet, dass** der Auslauf (Auslaufrohr 324) als Messeinrichtung dient für die Höhe des Randes des untergestellten Auffanggefäßes (344) als Kennwert für deren Größe.

17. Getränkebereiter nach Anspruch 16, **dadurch gekennzeichnet, dass** am Auslauf (Auslaufrohr 324), in dessen unterem Bereich ein Gefäßrandsensor (346) angeordnet ist, der quer zur Vertikalrichtung misst um bei der Abwärtsbewegung des Auslaufes (324) den Gefäßrand festzustellen (Fig. 3).

18. Getränkebereiter nach Anspruch 17, **dadurch gekennzeichnet, dass** die Höhenposition des Auslaufs (Auslaufrohr 324) mittels eines Stellmotors (374) von der Steuervorrichtung (315) mit Hilfe des Gefäßrandsensors (346) auf die richtige Höhe relativ zum untergestellten Auffanggefäß (344) einstellbar ist (Fig. 3).

19. Getränkebereiter nach einem der Ansprüche 1 bis 18, **dadurch gekennzeichnet, dass** als Vorgabe für den Flüssigkeitsdurchsatz ein Prozentsatz der Höhe des Auffanggefäßes als Füllstand mittels der Eingabeeinrichtung einspeicherbar ist.

20. Getränkebereiter nach einem der Ansprüche 1 bis 19, **dadurch gekennzeichnet, dass** als Vorgabe für den Flüssigkeitsdurchsatz ein Abstand des Füllstandes unter dem Rand des Auffanggefäßes mittels der Eingabeeinrichtung einspeicherbar ist.

21. Getränkebereiter nach einem der Ansprüche 1 bis 20 oder Verfahren zu dessen Betrieb, **dadurch gekennzeichnet, dass** als Vorgabe für den Flüssigkeitsdurchsatz der Füllstand im Auffanggefäß oder die dafür verwendete Flüssigkeitsförderzeit einspeicherbar ist, der bzw. die in einem der Programmierung dienenden Bereitungsvorgang mit Handsteuerung erreicht wurde.

22. Getränkebereiter nach einem der Ansprüche 1 bis 21, **dadurch gekennzeichnet, dass** die damit verwendeten Auffanggefäße je nach ihrer Art mit unterschiedlichen Kennmarken versehbar sind, von denen ein Kennwert direkt von der Messeinrichtung der Steuervorrichtung oder vom Benutzer für die Handeingabe über die Einstelleinrichtung ablesbar ist
